# EUROPÄISCHE PATENTANMELDUNG

(11) **EP 0 679 507 A1**
(43) Veröffentlichungstag der Anmeldung: **02.11.1995**
(21) Anmeldenummer: 95105543.3
(22) Anmeldetag: 12.04.1995
(51) Int. Cl.: B32B 27/20, B32B 27/30, B32B 27/34, B65D 65/40, H05F 1/02

(54) **Sperrschichtfolie mit leitfähigen Aussenschichten sowie ihre Verwendung**

(30) Priorität: 25.04.1994 DE 4414335
(71) Anmelder: WOLFF WALSRODE AKTIENGESELLSCHAFT, D-29699 Walsrode (DE)
(72) Erfinder: Schultze, Dirk, Dr., D-29683 Fallingbostel (DE); Bochow, Ricarda, Dipl.-Ing., D-29683 Fallingbostel (DE)
(74) Vertreter: Braun, Rolf, Dr.

(57) **Zusammenfassung**

Die vorliegende Erfindung betrifft eine oberflächenleitfähige und verschweißbare Verbundfolie aus mindestens drei Polymerharz-Bahnen, wobei die mindestens einschichtigen Deckbahnen jeweils mindestens eine Aussenschicht aus leitfähig modifizierten Polyolefin-Harzen besitzen, bevorzugt gefüllt mit mindestens 5 Gew.-% und höchstens 20 Gew.-% mindestens eines Rußes, jeweils bezogen auf die Gesamtmasse der die Aussenschicht bildenden gefüllten Polyolefin-Harzmasse, und die Kernbahn eine Mittelschicht aus Ethylen-Vinylalkohol-Harzen mit einem in die Polymerkette eingebundenen Gehalt an Ethylen-Bausteinen von mindestens 10 Gew.-% und höchstens 40 Gew.-%, jeweils bezogen auf die Gesamtmasse der die Mittelschicht bildenden Kunststoffe, oder aus Sperrschichtpolyamiden besteht und die Mittelschicht beidseitig von coextrudierten Schichten aus aliphatischem Polyamid eingefasst ist und die Deckbahnen durch Klebstofflaminierung mit den Polyamid-Schichten der Kernbahn verbunden sind.

## Beschreibung

Die Erfindung bezieht sich auf Sperrschichtfolien, die beim verlustarmen Lagern von Flüssigkeiten oder der Lagerung elektronischer Bauteile Verwendung finden und deren Oberflächen zur Vermeidung von Gefahren durch die Entladung statischer Elektrizität leitfähig ausgerüstet sind.

Es ist bekannt, daß durch Verdampfungsprozesse Verluste an gelagerten Flüssigkeiten auftreten, wenn diese im Gleichgewicht mit einer nicht gesättigten Umgebung stehen. Diese Verdampfung stellt neben dem wirtschaftlichen Verlust oftmals ein ökologisches Problem dar, welches vor allem dort auftritt, wo über Flüssigkeiten stehende Luftschichten ständig ausgetauscht werden. Dies tritt häufig bei Tanklägern und Transportbehältnissen auf.

Für Tankläger gehören Schwimmdecken zum Stand der Technik, die Verdampfungsverluste minimieren. Solche Schwimmdecken benötigen aber senkrechte Lagerwandungen für die einwandfreie Funktion.

Zum Stand der Technik gehören im Bereich der Lebensmittelverpackung flexible Blasen, die sich in ihrem Volumen dem Füllgut, beispielsweise Wein, anpassen ("Bag in Box"). Flexible Innenhüllen sind unter anderem in der DE 4000427 A1 beschrieben.

Während steife Auskleidungen von Treibstofftanks, beispielsweise beschrieben in der deutschen Gebrauchsmusteranmeldung G 9304896.3, zum Stand der Technik gehören, ist am Markt kein Folienmaterial erhältlich, welches die an Innenblasen für die Lagerung von Treibstoffen gestellten Anforderungen erfüllt.

Sollen Treibstoffe gelagert werden, so muß u. a. die Verhinderung von Zündfunken sicher gewährleistet sein. Hierzu ist mindestens die leitfähige Ausbildung der Aussenschichten der verwendeten Folie bzw. Blase vonnöten. Es ist bereits von Eymer in Kautschuk+Gummi, Kunststoffe 46 (1993) S.57-62 ausgeführt worden, daß für Faltbehälter die Leitfähigkeit der Aussenschichten genügt und ein geringer Durchgangswiderstand nicht erforderlich ist.

Eine leitfähige Oberflächen-Lackierung genügt nicht den Anforderungen, da diese das Risiko eines Autbrechens der Lackschicht und damit des Entstehens von Zündfunken nach wiederholten Faltvorgängen in sich birgt.

Zudem ist bekannt, daß Kunststoffe permeabel für niedermolekulare Treibstoffe sind. Hier muß die Folie Sperrschichteigenschatten bieten, die eine quantitative Permeation der niedermolekularen Komponenten verhindern können. Treibstoffe stellen Gemische dar, die sich wechselseitig in ihrem Permeationsverhalten beeinflussen können. Die Gemische sollten zudem nicht an einzelnen Komponenten verarmen.
Einzelne bekannte Sperrschichtmaterialien besitzen keine ausreichend universelle Sperrwirkung gegenüber der Vielzahl der Treibstoftkomponenten. Diese Problematik wird in der DE 4214383 diskutiert.

Die in der EP 0567383 für die Verwendung als Innenhüllen beschriebenen Folienlaminate weisen keine ausreichende Oberflächenleitfähigkeit auf. Zudem sind sie aus vergleichsweise durchlässigen Materialien gefertigt.

Die leitfähige Austattung von Kunststoffen durch Einarbeiten von leitfähigen Rußen, wie in der DE 4217717 beschrieben, gehört zum Stand der Technik. Jedoch bewirkt der eingearbeitete leitfähige Ruß, der sich durch hohe spezifische Oberflächen auszeichnet, mit seiner porösen Struktur eine Verringerung der Sperreigenschaften.

Ein bekanntes Verfahren zur Verbesserung der Sperrschichteigenschaften unter Kombination verschiedener Materialien stellt die Laminar-Blend-Technologie dar. Bei dieser Technologie werden Lamellen aus polaren Polymeren wie Polyamiden oder Ethylen-Vinylalkohol-Copolymeren mit einem Haftvermittler an ein unpolares Polymer gebunden, wobei Polyethylen bevorzugt wird. Die Laminar-Blend-Technologie ist u.a. von Rellman und Schenck in Kunststoffe 82 (1992) S.729-738 beschrieben.

Werden laminare Sperrschichtmaterialien jedoch bei der Lagerung von Treibstoffmischungen eingesetzt, so bewirken einzelne Treibstoffkomponenten eine Verminderung der Barrierewirkung, wie Kollen und Murthy in Annual Technical Conference, Society of Plastic Engineers (1992), S.1108-1112 ausführen. Hierbei macht sich u.a. das hohe Quellvermögen der gängigen Haftvermittler-Komponenten in Treibstoffen bemerkbar, so daß eine Häftvermittler-freie Folie erforderlich ist.

In der EP 0461836 A1 werden mehrschichtige Tanksysteme aus Polyethylen, haftvermittelnden Komponenten und Polyamid beschrieben. Aufgrund der Tankgeometrie sind für diese Anwendungen nicht die hohen Anforderungen an kraftschlüssige Verbindungen verschiedener Materialien wie bei Folien zu stellen. Der mangelnde Kraftschluß von haftvermittelnden Komponenten bei Lagerung in Benzin wird in der EP 0542182 A1 ausgeführt.

Die unterschiedliche Volumenquellung von Kunststoffen in Treibstoffen, insbesondere die von Haftvermittlern und Sperrschichtmaterialien, führt zu einer permanenten Belastung des Folienverbundes mit dem möglichen Resultat einer Delamination der Schichten.

Neben dem Explosionsschutz ist eine leitfähige Ausstattung auch für den Schutz hochintegrierter elektronischer Schaltelemente von Interesse, wenn diese zusätzlich gegen Korrosion geschützt werden sollen. Bekannte Folien mit leitfähiger Ausstattung bieten aufgrund ihrer Durchlässigkeit keinen langfristigen Schutz der Schaltungen vor derart zerstörendem Angriff.

Es war Aufgabe der vorliegenden Erfindung, eine Folie, die sich für diese Einsatzzwecke eignet, zur Verfügung zu stellen.

Eine Folie für die genannten anspruchvollen Anwendungen sollte sich flexibel dem verpackten Gut anpassen können. Dabei muß sie möglichst homogene Materialeigenschaften besitzen, so daß sie problemlos im Zuge der Formgebung und unter Erhalt der geforderten Eigenschaften mit sich selbst verschweißt werden kann.

Zum Schutz der in der Verwendung umschlossenen Güter vor der Entladung statischer Elektrizität darf die Folie einen elektrischen Oberflächenwiderstand, gemessen nach DIN 53482, Elektrodenanordnung A, von nicht mehr als 10⁸ Ohm besitzen. Dieser Widerstand von maximal 10⁸ Ohm muß auch bei niedrigen Luftfeuchtigkeiten sichergestellt sein, d.h. auf elektronischer und nicht auf Ionen-Leitfähigkeit beruhen.

Außerdem muß die gewünschte Folie sowohl den Verlust flüchtiger Lagergutkomponenten als auch das Eindringen unerwünschter Medien ins Lagergut effektiv gewährleisten.

Insbesondere für die Lagerung von Treibstoffkomponenten heißt dies, daß die Folie ein exzellentes Sperrverhalten gegenüber handelsüblichen Treibstoffen wie Benzin besitzt. Neben der Auswahl geeigneter Sperrschichtmaterialien für die einzelnen Bestandteile müssen diese auch optimal aufeinander abgestimmt sein. Um den Transport der in gelöstem Zustand diffundierenden Treibstoff-Komponenten durch die Folie zu erschweren, soll die Folie eine möglichst geringe Aufnahme von Benzin und Quellung in Benzin besitzen. Hiermit ist auch ein weitestgehender Schutz vor möglichen Materialschädigungen durch die Treibstoff-Komponenten verbunden, da das quantitative Eindringen letzterer verhindert wird.

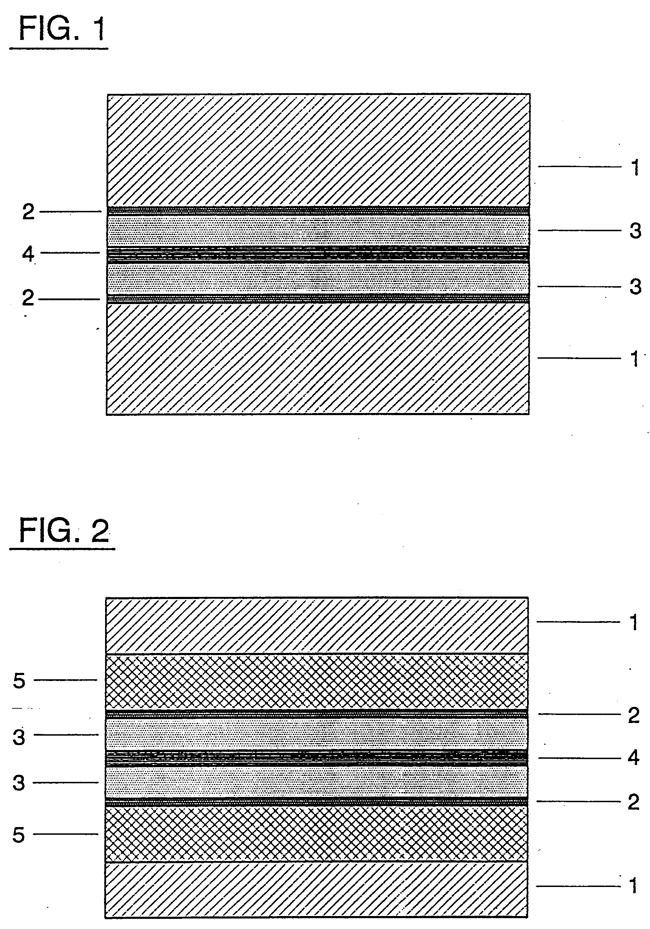

Erfindungsgemäß gelang dies durch eine Verbundfolie, die dadurch gekennzeichnet ist, daß sie mechanisch belastbar, Oberflächen-leitfähig und gegen sich selbst siegelfähig ist. Diese flexible Mehrschichtfolie besteht aus einem zur Mittelschicht symmetrischen, mindestens 7-schichtigen Folienverbund, wie er in Fig. 1 schematisch dargestellt ist und wird durch Klebstoff-Laminierung aus mehreren Folienbahnen hergestellt. Die Schichten werden von aussen nach innen aus leitfähigem Polyolefin (1), haftvermittelndem Klebstoff (2), Polyamid (3) und einer Sperrschicht (4), beispielsweise aus Ethylen-Vinylalkohol-Copolymeren aufgebaut, gebildet.

Als Sperrschichtmaterialien ebenfalls geeignet sind amorphe Polyamide, beispielsweise aufgebaut aus Hexamethylendiamin-Bausteinen sowie Terephthalsäure- und Isophthalsäure-Resten, oder teilaromatische, teilktistalline Polyamide, beispielsweise bestehend aus Meta-Xylylendiamin und Adipinsäure-Bausteinen.

Eine weitere Verbesserung der erfindungsgemäßen Eigenschaften, insbesondere eine Verbesserung der Sperrwirkung gegenüber polaren, protischen Lösungsmitteln, läßt sich durch den Einbau weiterer Polyolefin-Schichten (5), wie es in Fig. 2 schematisch dargestellt ist, erzielen.

Erfindungsgemäße Folien weisen eine Gesamtdicke von 50 µm bis 2000 µm auf, bevorzugt 200 µm bis 800 µm. Für die einzelnen Schichten werden die folgenden Dicken bevorzugt. Die Schicht (4) aus Ethylen-Vinylalkohol-Copolymeren (E/VAL) oder Sperrschichtpolyamiden besitzt bevorzugt eine Dicke von mindestens 2 µm und höchstens 10 µm. Die Schichten (3) aus Polyamid (PA) haben jeweils eine bevorzugte Stärke von minimal 5 µm und maximal 70 µm. Die Dicke der leitfähigen Aussenschicht aus leitfähig gefülltem Polyolefin-Harz liegt gewöhnlich zwischen 10 µm und 150 µm, bevorzugt zwischen 15 µm und 90 µm. Die Summe der Schichtdicken der beiden auf olefinischen Polymeren basierenden Schichten (1) + (5), einer wie in Fig. 2 skizzierten Folie, beträgt mindestens 15 µm.

Der Klebstoffauftrag für die Laminierung der Einzelbahnen sollte bevorzugt zwischen 3 und 15 g/m² betragen.

Eine gute Knickbeständigkeit der symmetrisch aufgebauten, durch Laminierung mehrerer Folienbahnen erhaltenen, Sperrschicht-Verbundfolie mit elektrisch leitfähigen Aussenschichten wird dadurch erreicht, daß die steifeste Schicht in der Mitte der Folie liegt, während sich die flexibleren Materialien in den Aussenschichten befinden.

Da das Sperrschichtmaterial aus Ethylen-Vinylalkohol-Copolymer-Harzen (E/VAL) - auch als verseifte oder teilverseifte Ethylen-Vinylacetat-Copolymere bekannt- oder Sperrschichtpolyamiden vergleichsweise steif ist, wird es geeigneterweise in die geometrische Mitte der symmetrischen Folie (4) gelegt und durch Coextrusion kraftschlüssig mit den sie umgebenden festigkeitstragenden Schichten (3) aus teilkristallinen, aliphatischen Polyamiden verbunden. Die äußeren Polyamid-Schichten (3) können somit auch die mechanische Belastung der Folie unter Anwendungsbedingungen aufnehmen. Als Polyamid-Harz für die äußeren Polyamid-Schichten (3) findet bevorzugt das Caprolactam-basierende Polyamid 6 Verwendung.

Die Sperrschichten-Trägerbahnen für die Verwendung in den erfindungsgemäßen Folien lassen sich nach den gängigen Folienherstellungsverfahren fertigen. Bevorzugt wird die Extrusion mit einem nachgeschalteten Folienwerkzeug. Die Sperrschicht-Trägerfolie wird in einer besonders bevorzugten Ausführung nach dem Flachfolienprozess durch Abzug der erkalteten Schmelze von einer gekühlten Gießwalze hergestellt.

Die Sperrschichten-Trägerbahnen, die für die Herstellung der erfindungsgemäßen Folien eingesetzt werden, lassen sich durch uniaxiale oder biaxiale Verstreckprozesse in ihren Eigenschaften an Vorzugsrichtungen der Belastung anpassen und/oder in ihren Sperrschichteigenschaften verbessern.

Die flexibleren Polyolefin-Schichten befinden sich erfindungsgemäß in den Aussenschichten der leitfähigen Sperrschichtfolie, so daß letztere bereits mit einem geringen Kraftaufwand an Knick- und/oder Faltbelastungen angepasst werden kann.

Die Zusammenfügung der Folienbahnen geschieht gewöhnlich durch Laminierung bzw. Kaschierung mit einer weiteren, Haftung-verbessernden Substanz, bevorzugt durch Klebstoff-Kaschierung. Für die Klebstoff-Kaschierung geeignet sind handelsübliche Klebstoffe. Bevorzugt werden hochvernetzende Polyurethan-Klebstoffe, wobei mehrkomponentige Klebstoffe, die sich aus Lösungsmitteln oder auch Lösungsmittel-frei verarbeiten lassen besonders geeignet sind. In besonderem Maß bevorzugt werden aus Lösungsmitteln verarbeitbare Klebstoffe. Geeignete Lösungsmittel sind beispielsweise Ethylacetat oder Methylethylketon.

Die haftvermittelnde Klebstoffschicht wird hierbei durch Reaktion einer mehrfunktionellen Isocyanat-Komponente mit einem mehrfunktionellen Alkohol bzw. Polyol ausgebildet. Als Polyole eignen sich insbesondere Polyether- und/oder Polyester-basierende-Präpolymere mit mindestens zwei funktionellen Gruppen. Besonders bevorzugt sind Polyester-basierende Präpolymere. Auf letzteren aufgebaute Klebstoffe besitzen ein geringeres Quellvermögen in handelsüblichen Treibstoffen als auf Polyether-Präpolymeren basierende Klebstoffe.

Als Isocyanate finden geeigneterweise die handelsüblichen aromatischen und aliphatischen Diisocyanate Verwendung. Ebenso geeignet sind mit Diisocyanaten verkappte Polyol-Präpolymere. Bevorzugte Diisocyanate kommen aus der Gruppe der aromatischen Diisocyanate. In einer besonders bevorzugten Ausführung werden auf Diisocyanatotoluol (TDI) basierende Isocyanat-Lösungen eingesetzt.

Das Auftragsgewicht der Klebstoffschicht (2) liegt günstigerweise bei 3,0 bis 15,0 g/m², bezogen auf die Trockenmasse der ausreagierten Klebstoff-Mischung. Die Verbindung der Folienbahnen zu einem Verbund erfolgt auf einer handelsüblichen Kaschiermaschine. Der aufgetragene Klebstoff-Film wird geeigneterweise bei 60 bis 140°C vorgetrocknet, die Temperatur der Kaschierwalze beträgt mindestens 80°C. Nach der Kaschierung sollte der laminierte Verbund mehrere Tage bei 40 bis 50°C gelagert werden, um die Reaktion der Klebstoffkomponenten zu einem möglichst hohen Umsatz zu führen.

Aufgrund der hohen Beständigkeit gegen eine Vielzahl von Chemikalien und vor allem die üblichen Treibstoftkomponenten, wie sie in der DIN 51600 genannt sind, werden Polyethylen-Harze (PE) für den Aufbau der Aussenschichten (1) der erfindungsgemäßen Sperrschichtfolie bevorzugt. Die Aussenschicht kann direkt durch Laminierung mit der Sperrschicht-Trägerfolie verbunden sein.

Das leitfähige Verhalten der Aussenschichten aus Polyolefin-Harzen, die einen Oberflächenwiderstand kleiner als 10⁸ Ohm besitzen sollen, wird bevorzugt durch das Einblenden von Ruß oder anderen leitfähigen Materialien dauerhaft sichergestellt.

Geeignete Ruße sind beispielsweise die bekannten Leit-Ruße mit einer BET-Oberfläche von größer oder gleich 600 m²/g, bestimmt nach ASTM D 3037 und einer durchschnittlichen Teilchengröße von weniger als 500 nm. Leitruße, die diese Anforderungen erfüllen sind beispielsweise Ketjenblack EC 600 von der Fa. Akzo oder Printex XE 2 von der Fa. Degussa. Ebenso geeignet sind Mischungen der Leitruße mit hinlänglich bekannten Farbrußen. Der für die leitfähige Ausrüstung bevorzugte Rußanteil liegt günstigerweise bei 5 bis 20 Gew.-%, jeweils bezogen auf die Gesamtmasse der leitfähigen Aussenschicht.

Besonders bevorzugte Polyolefine kommen aus der Gruppe der niedrigdichten Polyethylene (PE). Hierbei sind neben den verzweigten low-density PE (LDPE) auch die linearen low-density PE (LLDPE) geeignet. Bevorzugt werden hierbei Typen mit guter Fließfähigkeit, d.h. einem Melt-Flow-Index (MFI) größer 8 g/10 min, gemessen nach DIN 53735 (oder ASTM D 1238 ) bei einer Temperatur von 190 °C und einer Prüfbelastung von 2,16 kg.

Im Rahmen der Einarbeitung der Ruß-Partikel können zuvor oder mit dem Ruß Gleitmittel in das Polyolefin -Harz eingemischt werden, um die Verteilung des Leitrußes durch eine Verringerung der Schmelzezähigkeit des Harzes zu verbessern. Geeignete Gleitmittel sind beispielsweise in den Gruppen der Silikone wie Polydimethylsiloxane oder der Fettsäureamide wie Ölsäureamid oder Erucasäureamid zu finden. Bevorzugt werden als Gleitmittel Amidwachse eingesetzt, deren wirksame Menge geeigneterweise zwischen 0,2 Gew.-% und 2 Gew.-% beträgt, bevorzugterweise liegt ihr Anteil zwischen 0,3 Gew.-% und 0,7 Gew.-%, jeweils bezogen auf die Gesamtmasse der leitfähigen Polyolefin-Mischung.

Die leitfähige Aussenschicht aus Polyolefin-Harzen kann weitere Bestandteile enthalten. Zum Beispiel können zusätzlich weitere Polyolefine oder Polyolefin-Copolymere in Anteilen kleiner als 30 Gew.-%, bezogen auf die Gesamtmasse der beschriebenen Aussenschicht, enthalten sein.

Die für die Herstellung der leitfähigen Aussenschichten eingesetzten Ruß/Polyolefin-Harz-Mischungen besitzen bevorzugt einen MFI zwischen 0,2 und 5 g/10 min, jeweils bestimmt nach DIN 53735 bei 190 °C und einer Prütbelastung von 5 kg.

Zur Verbesserung der Sperreigenschaften kann die Sperrschicht-Trägerfolie als Kernbahn innerhalb des zu schaffenden Verbundes durch ein nicht rußgefülltes polyolefinisches Harz abgedeckt werden. Es erweist sich als vorteilhaft, die durch den porösen Charakter des Leitrußes verminderte Sperrwirkung des die Aussenschicht (1) der Verbundfolie bildenden Polyolefin-Harzes durch Coextrusion mit einer weiteren Schicht eines nicht leitfähigen Polyolefins zu verbessern, wie es in Fig. 2 als Schicht (5) dargestellt ist.

Diese Lage muß nicht leitfähig ausgeführt sein. Bevorzugt für eine solche Zwischenlage sind PE mit niedriger bis mittlerer Dichte. Ihre Dichte beträgt in einer besonders bevorzugten Ausführung 0,92 bis 0,94 g/cm³, ihr MFI liegt zwischen 0,5 und 5,0 g/ 10 min, gemessen nach DIN 53735 bei 190°C und einer Prütbelastung von 2,16 kg. Besonders bevorzugt sind zudem Typen, die frei von Gleitmitteln und anderen migrierenden Substanzen sind.

Die Deckbahnen der erfindungsgemäßen Folien lassen sich nach den gängigen Folienherstellungsverfahren fertigen. Bevorzugt wird die Extrusion mit einem nachgeschalteten Folienwerkzeug. Die Aussenlagen werden in einer besonders bevorzugten Ausführung nach dem Blasfolienverfahren hergestellt.

Die Verarbeitungseigenschaften der erfindungsgemäßen Folie lassen sich durch Zugabe von Additiven in den jeweils wirksamen Mengen zu den eingesetzten Harz-Rohstoffen einstellen und/oder verbessern, bevorzugt finden Gleit- und/oder Antiblockmittel oder auch Weichmacher Verwendung.

Um bestimmte Eigenschaften der erfindungsgemäßen Folie dauerhaft zu erhalten, können die eingesetzten Kunststoff-Harze geeignete Zusätze in den jeweils wirksamen Mengen erhalten, vorzugsweise sind dies Hydrolyse- und/oder Photostabilisatoren und/oder Antioxidantien.

Additive und Stabilisatoren für Kunststoffe sind beispielsweise beschrieben in Gächter/Müller: Kunststoff Additive, Carl Hanser Verlag München, 3. Ausgabe (1989).

Vor der Zusammenführung der Bahnen in einer Kaschiermaschine werden diese geeigneterweise durch ein Vorbehandlungsverfahren in ihren Oberflächeneigenschaften im Hinblick auf die bei der Kaschierung erzielbare Verbundhaftung modifiziert. Hierzu eignen sich insbesondere übliche Flamm-, Corona-, Plasma- oder Fluorbehandlungen. Solche Verfahren wurden beispielsweise von Dorn und Wahono in Maschinenmarkt 96 (1990) 34-39 oder Milker und Möller in Kunststoffe 82 (1992) 978-981 ausführlich dargestellt.

Ein bevorzugtes Verfahren ist die Corona-Vorbehandlung. Für die Vorbehandlung der polyolefinischen Bahnen wird eine Vorbehandlung mit beschichteten oder keramisierten Elektrodenstäben bevorzugt. An der vorbehandelten Folienoberfläche befindliche Rußagglomerate führen bei der elektrischen Vorbehandlung leitfähiger Polymere zu erhöhten Stromdichten. Als Vorbehandlungsergebnis werden dann punktuell sehr hohe Oberflächenspannungen erreicht, während über weite Bereiche der behandelten Fläche nur geringfügige Erhöhungen der Oberflächenspannung resultieren. Die Abdeckung der leitfähigen Schicht mit einem nicht leitfähig ausgestatteten Polyolefin im Rahmen der Coextrusion führt zu einer verbesserten Verbundhaftung, da das homogenere Material eine gleichmäßigere Modifizierung der Oberfläche bedingt.

Da die erfindungsgemäßen Folien beidseitig gegen sich selbst siegelfähig oder schweißbar sind, lassen sich aus ihnen mit hoher gestalterischer Freiheit Beutel, größeren Behältnissen nachgeformte Blasen, Innenauskleidungen oder aber auch freistehende Faltbehältnisse herstellen.

Die EP 0567383 beschreibt beispielsweise Tanksysteme, bestehend aus starren Wandungen und flexiblen Innenauskleidungen sowie Verschweißtechniken für Bahnmaterialien. Die erfindungsgemäße Folie eignet sich beispielsweise für derartige flexible Innenhüllen sowie für die dort beschriebenen Verschweißtechniken.

Die erfindungsgemäße Folie eignet sich aufgrund ihres Eigenschaftsbildes besonders für die Aufbewahrung explosionsgefährdeter Medien, inbesondere von Flüssigkeiten. Zu den besonders geeigneten Flüssigkeiten gehören die Treibstoffe, vor allem die Otto-Kraftstoffe aber auch Flugtreibstoffe. Durch das elektrische Oberflächen-Ableitvermögen der erfindungsgemäßen Folie kann das Risiko des Auftretens elektrostatischer Aufladungen verringert werden, so daß bei deren Entladung auch keine Zündfunken entstehen können. Durch ihre außerordentlich hohe Sperrwirkung verhindert die Folie die Verarmung des Treibstoffes an einzelnen bevorzugt verdampfenden Komponenten. Damit besitzt sie auch ökologische Vorteile, da die Belastung der Umwelt mit Treibstoffdämpfen durch ihren Einsatz minimiert werden kann.

Durch chemische Oberflächenmodifizierungen der Aussenschichten der erfindungsgemäßen Folie, nach einem der oben genannten Verfahren, wie Plasma- oder Fluorbehandlung, lassen sich die Sperreigenschaften der erfindungsgemäßen Folie optimal an die zu erwartenden Kontaktmedien der Folie anpassen bzw. weiter verbessern.

Die Folie kann neben dem Verlust an Fluidkomponenten auch das mögliche Eindringen ebensolcher verhindern und damit zum Schutz hochempfindlicher Teile, wie beispielsweise hochintegrierter Schaltelemente eingesetzt werden.

Im folgenden wird die Erfindung anhand von Beispielen und Vergleichsbeispielen noch näher erläutert.

### Beispiel 1

Ein symmetrischer Folienaufbau wurde durch Klebstoff-Kaschierung hergestellt. Auf beide Seiten einer coextrudierten Sperrschicht-Trägerfolie wurden coextrudierte PE-Bahnmaterialien kaschiert. Der Folienaufbau entspricht dem in Fig. 2 dargestellten Schema. Die symmetrische dreischichtige Sperrschicht-Träger folie hatte eine mittlere Dicke von 80 µm. Die mittlere Abfolge der Schichtenanteile war 47 % PA (3), 6 % E/VAL (4) und 47 % PA (3), jeweils bezogen auf die Gesamtschichtdicke der Sperrschicht-Trägerfolie. Beide PA-Aussenseiten (3) der Sperrschicht-Trägerfolie wurden Corona-vorbehandelt.

Das eingesetzte E/VAL-Harz hatte einen in die Polymerkette eingebundenen Anteil an Ethylen-Bausteinen von 32 Gew.-% und eine Dichte von 1,2 g/cm³. Als PA wurde ein auf Caprolactam basierendes, nukleiertes PA6 mit einer Dichte von 1,1 g/cm³ und einer höheren Viskosität, d.h. das Zahlenmittel der Molmasse betrug etwa 30.000 g/mol, verwendet. Das leitfähige PE-Harz hatte eine Dichte von 1,1 g/cm³ und einen MFI von 3,3 g/10 min, gemessen bei 190°C und einer Prüfbelastung von 5 kg. Das nicht leitfähige Olefin-Harz hatte eine Dichte von 0,92 g/cm³ und einen MFI von 2,0 g/10 min, gemessen bei 190°C und einer Prüfbelastung von 2,16 kg.

Das verwendete zweischichtige PE-Bahnmaterial hatte eine mittlere Dicke von 185 µm, die mittlere Abfolge der Schichten war 48 % eines mit Leit-Ruß gefüllten PE mit niedriger Dichte (1) und 52 % eines linearen PE mit niedriger Dichte (5), jeweils bezogen auf die Gesamtschichtdicke des PE-Bahnmaterials. Das PE-Bahnmaterial wurde einseitig auf der durch das lineare PE mit niedriger Dichte (5) gebildeten Oberfläche mittels Corona-Entladung vorbehandelt.

Der Gesamtverbund wurde in zwei Kaschier-Schritten erhalten, wobei jeweils eine PE-Bahn gegen jeweils eine der beiden Seiten der Sperrschicht-Trägerfolie kaschiert wurde.
Hierzu wurden jeweils 6 g/m² Lösungsmittel-haltiger, zweikomponentiger, Polyurethan-basierender Klebstoff (2) auf die jeweilige Aussenschicht (3) der Sperrschicht-Trägerfolie aufgetragen, durch Vortrocknung weitestgehend vom Lösemittel befreit und in einem beheizten Presswerkzeug gegen die jeweilige vorbehandelte Seite des jeweiligen PE-Bahnmaterials aus linearem PE mit niedriger Dichte (5) verliebt.

Der Klebstoff wurde über fünf Tage bei einer Lagertemperatur von 50°C ausgehärtet.

### Beispiel 2

Ein symmetrischer Folienaufbau wurde analog zu Beispiel 1 erhalten, wobei jedoch einschichtige leitfähige PE-Bahnen als Aussenlagen verwendet wurden. Diese hatten eine mittlere Dicke von jeweils 150 µm. Der Folienautbau entspricht dem in Fig. 1 dargestellten Schema. Die eingesetzte Sperrschicht-Trägerfolie entspricht der in Beispiel 1 beschriebenen Sperrschicht-Trägerfolie.

Das einschichtige leitfähige Bahnmaterial (1) wurde aus mit Leit-Ruß gefülltem PE niedriger Dichte durch Blasfolienextrusion hergestellt. Das verwendete leitfähige Harz entsprach dem aus Beispiel 1. Das Bahnmaterial wurde einseitig Corona-vorbehandelt.

Der Gesamtverbund wurde in zwei Kaschier-Schritten erhalten, wobei jeweils eine leitfähige PE-Bahn gegen jeweils eine der beiden Seiten der Sperrschicht-Trägerfolie kaschiert wurde.
Hierzu wurden jeweils 11 g/m² Lösungsmittel-haltiger, zweikomponentiger, Polyurethan-basierender Klebstoff (2) auf die jeweilige Aussenschicht (3) der Sperrschicht-Trägerfolie aufgetragen, durch Vortrocknung weitestgehend vom Lösemittel befreit, und in einem beheizten Presswerkzeug gegen die jeweilige vorbehandelte Seite der jeweiligen PE-Bahn (1) verklebt.

Der Klebstoff wurde über fünf Tage bei einer Lagertemperatur von 50°C ausgehärtet.

### Vergleichsbeispiel

Eine symmetrisch aufgebaute Folie wurde durch fünf-Schicht-Coextrusion erhalten. Die Aussenschichten bestanden jeweils aus mit Leit-Ruß ausgestattetem PE niedriger Dichte. Sie hatten eine mittlere Dicke von jeweils 180 µm. Das verwendete leitfähige Harz entsprach dem in Beispiel 1 beschriebenen leitfähigen PE. Den Kern der Folie bildete eine im Mittel 80 µm dicke PA-Schicht aus einem Caprolactam-basierenden PA6 mit einer Dichte von 1,1 g/cm³. Das eingesetzte PA war nukleiert und besaß ein Zahlenmittel der Molmasse von etwa 30.000 g/mol.

Die Verbindung der Kernschicht mit den leitfähigen PE-Aussenschichten wurde durch jeweils eine Haftvermittlerschicht mit einer mittleren Dicke von je 10 µm zwischen der Kernschicht und der jeweiligen Aussenschicht erzielt. Der eingesetzte Haftvermittler aus einem Ethylen-Copolymeren mit einem Anteil von 6 Gew.-% Butyl-Acrylat und einem Anteil von 3 Gew.-% Maleinsäure-Anhydrid hatte einen MFI von 5,0 g/10 min, gemessen bei 190°C und einer Prüfbelastung von 2,16 kg.

Aus der Gegenüberstellung von Beispielen und Vergleichsbeispielen in der nachfolgenden Tabelle geht eindeutig hervor, daß die erfindungsgemäße Folien der Vergleichsfolie hinsichtlich des gewünschten Eigenschaftsbildes, besonders der Sperrwirkung, überlegen sind.

**Tabelle**

| | Prüfung | Einheit | Beispiel 1 | Beispiel 2 | Vergleichsbeispiel |
|---|---|---|---|---|---|
| 1 | Dicke | µm | 460 | 400 | 460 |
| 2 | Oberflächenwiderstand | Ohm | < 10⁵ | <10⁵ | <10⁵ |
| 3 | Reißkraft, längs | N/15mm | 241 | 230 | 264 |
| 4 | Reißkraft, quer | N/15mm | 198 | 183 | 206 |
| 5 | Verbundhaftung nach Fertigung | N/15mm | >10 | 7,5 | >10 |
| 6 | Verbundhaftung nach Lagerung in Benzin | N/15mm | 7,6 | 5,1 | <2 |
| 7 | Benzindurchlässigkeit | g/(m² 24h) | <0,1 | <0,1 | 0,6 |

Die angewendeten Prüfvorschriften sind folgend aufgeführt.

Alle Prüfungen wurden im oder gegen das Normalklima 23 °C, 50% relative Feuchte nach DIN 50014 durchgeführt.

### Bestimmung der Dicke

Die Bestimmung der Dicke erfolgte nach DIN 53370

### Messung des Oberflächenwiderstandes

Die Messung des Oberflächenwiderstandes erfolgte nach DIN 53482, Elektrodenanordnung A.

### Bestimmung der Reißkraft

Die Bestimmung der Reißkraft erfolgte in Anlehnung an DIN 53455. Es wurden Prüfstreifen mit einer Breite von 15 mm und einer Einspannlänge von 50 mm verwendet.

### Ermittlung der Verbundhaftung

Die Ermittlung der Verbundhaftung zwischen Aussenschicht und Polyamidschicht erfolgte nach DIN 53357, Verfahren B. Sie wurde direkt nach Fertigung und nach einmonatiger Lagerung in Benzin durchgeführt.

### Bestimmung der Benzindurchlässigkeit

Die Durchlässigkeit der Folien gegenüber Benzin wurde in Anlehnung an DIN 53532 bestimmt. Als Benzin wurde ein handelsüblicher Super-Ottokraftstoff nach DIN 51607/EN 228 eingesetzt.

## Patentansprüche

1. Oberflächenleitfähige und verschweißbare Verbundfolie aus mindestens drei Polymerharz-Bahnen, dadurch gekennzeichnet, daß die mindestens einschichtigen Deckbähnen jeweils mindestens eine Aussenschicht aus leitfähig modifizierten Polyolefin-Harzen besitzen, bevorzugt gefüllt mit mindestens 5 Gew.-% und höchstens 20 Gew.-% mindestens eines Rußes, jeweils bezogen auf die Gesamtmasse der die Aussenschicht bildenden gefüllten Polyolefin-Harzmasse, und die Kernbahn eine Mittelschicht aus Ethylen-Vinylalkohol-Harzen mit einem in die Polymerkette eingebundenen Gehalt an Ethylen-Bausteinen von mindestens 10 Gew.-% und höchstens 40 Gew.-%, jeweils bezogen auf die Gesamtmasse der die Mittelschicht bildenden Kunststoffe, oder aus Sperrschichtpolyamiden besteht und die Mittelschicht beidseitig von coextrudierten Schichten aus aliphatischem Polyamid eingefasst ist und die Deckbahnen durch Klebstofflaminierung mit den Polyamid-Schichten der Kernbahn verbunden sind.

2. Mehrschichtfolie nach Anspruch 1, dadurch gekennzeichnet, daß die Deckbahnen zusätzlich zu der Schicht aus leitfähig modifizierten Polyolefin-Harzen mindestens eine weitere Schicht aus nicht leitfähig modifizierter Polyolefin-Harzmasse besitzt und, daß jeweils die nicht leitfähig modifizierten Aussenschichten der Deckbahnen durch Klebstofflaminierung mit den Polyamidschichten der Kernbahn verbunden sind.

3. Mehrschichtfolie nach einem der Ansprüche 1 und/oder 2, dadurch gekennzeichnet, daß die Folie einen symmetrischen Aufbau hinsichtlich der Lage und der Dicke der einzelnen Schichten aufweist, bezogen auf die geometrische Mitte des Schichtaufbaus der Folie.

4. Mehrschichtfolie nach einem der Anprüche 1 bis 3, dadurch gekennzeichnet, daß die Kernbahn der Folie durch einen uniaxialen oder biaxialen Verstreckprozess orientiert ist.

5. Mehrschichtfolie nach einem der Ansprüche 1 bis 4, dadurch gekennzeichnet, daß die Folie eine Gesamtdicke von 50 µm bis 2000 µm, bevorzugt von 200 µm bis 800 µm, aufweist.

6. Mehrschichtfolie nach einem der Ansprüche 1 bis 5, dadurch gekennzeichnet, daß die Summe der Dicken der Deckbahnen einen Gesamtanteil von 20 % bis 90 %, bevorzugt 30 % bis 80 %, an der Gesamtschichtdicke der Folie aufweist.

7. Verwendung der Mehrschichtfolie nach einem der Ansprüche 1 bis 6, dadurch gekennzeichnet daß die Folie zur Ausbildung flexibler Behältnisse und/oder flexibler Blasen für die Innenauskleidung von formstabilen Behältnissen eingesetzt wird.

8. Verwendung der Mehrschichtfolie nach einem der Ansprüche 1 bis 6 als zusätzliche Hülle und Dampfsperre bei der Lagerung brennbarer Flüssigkeiten.

9. Verwendung einer Folie nach den Ansprüchen 1 bis 6, dadurch gekennzeichnet, daß die Folie für die Ausbildung von Hüllen zur Lagerung von Kraftstoffen verwendet wird.

10. Verwendung der Mehrschichtfolie nach einem der Anprüche 1 bis 6, zur Verpackung und/oder Aufbewahrung von elektronischen Bauteilen und/oder Komponenten.
